# EUROPEAN PATENT APPLICATION

(11) **EP 4 629 458 A1**
(43) Date of publication of application: **08.10.2025**
(21) Application number: 25167365.3
(22) Date of filing: 31.03.2025
(51) Int. Cl.: H02G 1/12

(54) **TWISTED PAIR CABLE PROCESSING SYSTEM AND TWISTED PAIR CABLE CUTTING METHOD**

(30) Priority: 01.04.2024 CN 202410390940
(71) Applicant: Tyco Electronics (Shanghai) Co., Ltd., Pilot Free Trade Zone Shanghai 200131 (CN)
(72) Inventor: Zhou, Baisong, Suzhou, 32 215123 (CN); Yang, Jianguo, Shanghai, 200233 (CN); Li, Chunlong, Shanghai, 200233 (CN); Liu, Chaolei, Suzhou, 32 215123 (CN)
(74) Representative: Grünecker Patent- und Rechtsanwälte PartG mbB

(57) **Abstract**

The present invention discloses a twisted pair cable processing system and a twisted pair cable cutting method. The twisted pair cable processing system comprises: a frame (20); and a core wire cutting device which is installed on the frame (20) for cutting a pair of exposed and untwisted core wires (11) of a twisted pair cable (1). The core wire cutting device comprises: a positioning body (5) which is formed with a cable insertion hole (5b) that allows one end of the twisted pair cable (1) to be inserted and a pair of core wire insertion holes (5a) that allow the pair of exposed core wires (11) of the twisted pair cable (1) to pass through; and a cutting tool (4) which is set behind the positioning body (5) for cutting the pair of exposed core wires (11) of the twisted pair cable (1). A positioning reference surface (5c) perpendicular to the axial direction of the core wire insertion hole (5a) is formed in the cable insertion hole (5b), and the positioning reference surface (5c) is used to axially rest against the cutting end face (10a) of the outer coating layer (10) of the twisted pair cable (1) to axially position the twisted pair cable (1) and ensure that the pair of exposed core wires (11) of the cut twisted pair cable (1) have a predetermined length (L).

## Description

### CROSS-REFERENCE TO RELATED APPLICATION

This application claims the benefit of Chinese Patent Application No. CN202410390940.X filed on April 1, 2024 in the State Intellectual Property Office of China, the whole disclosure of which is incorporated herein by reference.

### BACKGROUND OF THE INVENTION

### Field of the Invention

The present invention relates to a twisted pair cable processing system, a cutting method for cutting a pair of core wires of a twisted pair cable using the twisted pair cable processing system, and a method for untwisting a pair of core wires of a twisted pair cable using the twisted pair cable processing system.

### Description of the Related Art

In the prior art, when it is necessary to crimp terminals on a pair of exposed core wires of a twisted pair cable, the outer layer of one end of the twisted pair cable needs to be removed to expose the pair of core wires at one end of the twisted pair cable. Then manually untwist the pair of exposed core wires of the twisted pair cable. Then it is necessary to cut the pair of exposed core wires so that the length of the pair of exposed core wires is equal to the predetermined length. In the prior art, the twisted pair cable is first manually placed and positioned onto the clamp mechanism, and then the pair of exposed core wires of the twisted pair cable is cut using a cutting mechanism. The length of the exposed core wire of the cut twisted pair cable depends on whether the cable can be placed in the predetermined position on the clamping mechanism. Due to the uneven cutting end face of the outer layer of the twisted pair cable, it is sometimes impossible to place the twisted pair cable at the predetermined position, resulting in a large deviation between the length of the pair of exposed core wires of the cut twisted pair cable and the predetermined length.

In addition, in the prior art, the need to manually untwist a pair of core wires of twisted pair cables can reduce production efficiency.

### SUMMARY OF THE INVENTION

The present invention has been made to overcome or alleviate at least one aspect of the above mentioned disadvantages.

According to an aspect of the present invention, there is provided a twisted pair cable processing system. The twisted pair cable processing system comprises of: a frame; and a core wire cutting device which is installed on the frame for cutting a pair of exposed and untwisted core wires of a twisted pair cable. The core wire cutting device comprises of: a positioning body which is formed with a cable insertion hole that allows one end of the twisted pair cable to be inserted and a pair of core wire insertion holes that allow the pair of exposed core wires of the twisted pair cable to pass through; and a cutting tool which is set behind the positioning body for cutting the pair of exposed core wires of the twisted pair cable. A positioning reference surface perpendicular to the axial direction of the core wire insertion hole is formed in the cable insertion hole, and the positioning reference surface is used to axially rest against the cutting end face of the outer coating layer of the twisted pair cable to axially position the twisted pair cable and ensure that the pair of exposed core wires of the cut twisted pair cable have a predetermined length.

According to an exemplary embodiment of the present invention, the core wire cutting device further comprises: a first cable fixture which is set in front of the positioning body for clamping the twisted pair cable; and a fixture moving device installed on the frame for moving the first cable fixture. Before cutting the pair of core wires of the twisted pair cable, the fixture moving device moves the first cable fixture axially backward, so that the cutting end face of the outer layer of the twisted pair cable clamped by the first cable fixture is axially pressed against the positioning reference surface.

According to another exemplary embodiment of the present invention, the first cable fixture comprises: a first movable frame and a second movable frame which are capable of moving along the axial direction and a vertical direction perpendicular to the axial direction; and a first clamping block and a second clamping block which are respectively installed on the first movable frame and the second movable frame. The fixture moving device is connected to the first movable frame and the second movable frame, and is used to drive the first movable frame and the second movable frame to move along the axial direction and the vertical direction.

According to another exemplary embodiment of the present invention, the fixture moving device comprises: a first vertical moving device which is connected to the first movable frame and used to drive the first movable frame to move in the vertical direction; a second vertical moving device which is connected to the second movable frame and used to drive the second movable frame to move in the vertical direction; and an axial moving device which is connected to the first vertical moving device and the second vertical moving device, for driving the first vertical moving device and the second vertical moving device to move along the axial direction.

According to another exemplary embodiment of the present invention, the first vertical moving device and the second vertical moving device are used to drive the first clamping block and the second clamping block to move synchronously in the vertical direction to clamp or release the twisted pair cable; the axial moving device is used to drive the first clamping block and the second clamping block to synchronously move backward along the axial direction, so that the cutting end face of the outer layer of the clamped twisted pair cable is axially pressed against the positioning reference surface.

According to another exemplary embodiment of the present invention, V-shaped grooves are respectively formed on the first clamping block and the second clamping block, and the twisted pair cable is suitable for being clamped in the V-shaped grooves of the first clamping block and the second clamping block.

According to another exemplary embodiment of the present invention, the core wire cutting device further comprises a tool moving device which is installed on the frame for moving the cutting tool. After the cutting end face of the outer layer of the twisted pair cable is axially pressed against the positioning reference surface, the tool moving device moves the cutting tool in the vertical direction to cut the pair of exposed core wires of the twisted pair cable.

According to another exemplary embodiment of the present invention, the cutting tool comprises an upper cutting blade and a lower cutting blade facing each other in the vertical direction, and the tool moving device is adapted to synchronously move the upper cutting blade and the lower cutting blade along the vertical direction to cut the pair of exposed core wires of the twisted pair cable.

According to another exemplary embodiment of the present invention, the tool moving device comprises: a first moving device which is connected to the upper cutting blade and is used to drive the upper cutting blade to move in the vertical direction; a second moving device which is connected to the lower cutting blade and is used to drive the lower cutting blade to move in the vertical direction; and a third moving device which is connected to the first moving device and the second moving device, and is used to drive the first and second moving devices and the first and second cutting blades to move along the axial direction.

According to another exemplary embodiment of the present invention, a pair of V-shaped cutting grooves are respectively formed on the upper cutting blade and the lower cutting blade, and the pair of V-shaped cutting grooves correspond to the pair of core wires for positioning and cutting the pair of core wires.

According to another exemplary embodiment of the present invention, the twisted pair cable processing system further comprises of: a second cable fixture which is used to clamp the twisted pair cable cut by the core wire cutting device; a position detection device which is installed at the position detection station to detect the position of the pair of exposed core wires of the twisted pair cable; a cable moving device which is used to move the second cable fixture in a horizontal direction perpendicular to the axial direction, in order to move the twisted pair cable to the position detection station and the subsequent terminal crimping station; and a position compensation device, which controls the movement distance of the cable moving device based on the difference between the actual position of the pair of core wires detected by the position detection device and the preset position of the pair of core wires, to accurately move the pair of core wires of the twisted pair cable to the terminal crimping station.

According to another exemplary embodiment of the present invention, the position detection device comprises: a camera which is used to capture images of the pair of exposed core wires of the twisted pair cable; and a computing device used to calculate the position of the pair of core wires based on the images captured by the camera.

According to another exemplary embodiment of the present invention, the twisted pair cable processing system further comprises a core wire untwisting device which is installed on the frame for untwisting the pair of exposed core wires of the twisted pair cable.

According to another exemplary embodiment of the present invention, the core wire untwisting device comprises: an installation plate fixed to the frame; a rotating wheel which is rotatably mounted on the installation plate and formed with an axial through installation hole; the positioning body which is embedded into the installation hole of the rotating wheel and formed with a pair of core wire insertion holes; and a driver for driving the rotating wheel and the positioning body embedded in the rotating wheel to rotate together. When the ends of the pair of exposed core wires of the twisted pair cable are inserted into the pair of core wire insertion holes, the driver drives the rotating wheel and the positioning body to rotate to unwind the pair of exposed core wires of the twisted pair cable.

According to another exemplary embodiment of the present invention, the rotating wheel comprises: a wheel body which has axially opposite front and rear sides; and a pivot shaft part which is connected to the rear side of the wheel body. A pivot hole is formed in the installation plate, and the pivot shaft part is rotatably mounted into the pivot hole, so that the rotating wheel can be rotated around the axis of the pivot hole.

According to another exemplary embodiment of the present invention, the positioning body comprises: a main body which is embedded in the installation hole; and a pair of ears connected to the main body and facing each other in the radial direction of the main body. A pair of positioning grooves are formed on the rotating wheel, and the pair of ears of the positioning body are embedded in the pair of positioning grooves, so that the positioning body cannot be rotated relative to the rotating wheel.

According to another exemplary embodiment of the present invention, the core wire untwisting device further comprises: a driving wheel which is rotatably mounted on the installation plate; and a transmission belt which is connected between the rotating wheel and the driving wheel. The driver is connected to the driving wheel for driving the driving wheel to rotate, so as to drive the rotating wheel to rotate through the driving wheel and the transmission belt.

According to another exemplary embodiment of the present invention, a receiving recess is formed on the front side of the installation plate, and the rotating wheel, the driving wheel, and the transmission belt are accommodated in the receiving recess; the core wire untwisting device further comprises a front cover plate which is installed on an opening of the accommodating recess to cover the opening of the accommodating recess.

According to another aspect of the present invention, there is provided a method for cutting a twisted pair cable. The method comprising following steps of:
S11: providing the above twisted pair cable processing system;
S12: using a core wire untwisting device to untwist the pair of exposed core wires of the twisted pair cable;
S13: passing the pair of exposed and untwisted core wires of the twisted pair cable through a pair of core wire insertion holes of the positioning body from front to back;
S14: using a first cable fixture to clamp the twisted pair cable and moving the twisted pair cable axially backwards, so that the cutting end face of the outer layer of the twisted pair cable is axially pressed against the positioning reference surface inside the positioning body; and
S15: using a cutting tool to cut the pair of exposed core wires of the twisted pair cable, so that the length of the pair of exposed core wires of the twisted pair cable is equal to the predetermined length.

According to an exemplary embodiment of the present invention, the step S15 comprises of:
S151: the upper cutting blade and lower cutting blade of the cutting tool clamp the roots of the pair of core wires and are moved axially backwards to straighten the pair of core wires through the upper cutting blade and lower cutting blade;
S152: the upper cutting blade and lower cutting blade of the cutting tool are moved to the predetermined outer insulation layer cutting position and cut the outer insulation layer of the pair of core wires;
S153: the upper cutting blade and lower cutting blade of the cutting tool are moved axially backwards to strip a section of the outer insulation layer from the pair of core wires; and
S154: the upper cutting blade and lower cutting blade of the cutting tool are moved to the predetermined core wire conductor cutting position and cut the exposed core wire conductors of the pair of core wires.

In the aforementioned exemplary embodiments according to the present invention, before cutting the pair of core wires of the twisted pair cable, the cutting end face of the outer layer of the twisted pair cable is tightly pressed against the positioning reference surface inside the positioning body, so that the twisted pair cable is accurately positioned at a predetermined position, thereby ensuring that the length of the pair of exposed core wires of the cut twisted pair cable can be equal to the predetermined length.

In addition, in the aforementioned exemplary embodiments according to the present invention, the twisted pair cable processing system integrates a core wire untwisting device, which can automatically untwist the pair of core wires of the twisted pair cable and improve production efficiency.

### BRIEF DESCRIPTION OF THE DRAWINGS

The above and other features of the present invention will become more apparent by describing in detail exemplary embodiments thereof with reference to the accompanying drawings, in which:
Figure 1A shows an illustrative view of a twisted pair cable according to an exemplary embodiment of the present invention, in which a pair of exposed core wires have not yet been untwisted;
Figure 1B shows an illustrative view of a twisted pair cable according to an exemplary embodiment of the present invention, in which a pair of exposed core wires have been untwisted and separated;
Figure 1C shows an illustrative view of a twisted pair cable according to an exemplary embodiment of the present invention, in which a pair of exposed core wires have been cut;
Figure 2 shows an illustrative view of the core wire untwisting device and core wire cutting device of a twisted pair cable processing system according to an exemplary embodiment of the present invention when viewed from the front side;
Figure 3 shows an illustrative view of the core wire untwisting device and core wire cutting device of a twisted pair cable processing system according to an exemplary embodiment of the present invention when viewed from the rear side;
Figure 4 shows an illustrative perspective view of the first cable fixture of the core wire cutting device of the twisted pair cable processing system according to an exemplary embodiment of the present invention;
Figure 5 shows an illustrative perspective view of the cutting tool of the core wire cutting device of the twisted pair cable processing system according to an exemplary embodiment of the present invention;
Figure 6 shows an illustrative perspective view of the core wire untwisting device of a twisted pair cable processing system according to an exemplary embodiment of the present invention, in which the positioning body is embedded in the rotating wheel;
Figure 7 shows an illustrative perspective view of the core wire untwisting device of a twisted pair cable processing system according to an exemplary embodiment of the present invention, in which the positioning body is pulled out from the rotating wheel;
Figure 8 shows an illustrative perspective view of the installation plate of the core wire untwisting device of the twisted pair cable processing system according to an exemplary embodiment of the present invention;
Figure 9 shows an illustrative perspective view of the core wire untwisting device of a twisted pair cable processing system according to an exemplary embodiment of the present invention;
Figure 10 shows a cross-sectional view of the positioning body of the core wire untwisting device of the twisted pair cable processing system according to an exemplary embodiment of the present invention;
Figure 11 shows an illustrative perspective view of a twisted pair cable processing system according to an exemplary embodiment of the present invention, in which a position detection device is shown;
Figure 12 shows an illustrative view of the core wire cutting device of a twisted pair cable processing system according to an exemplary embodiment of the present invention, wherein the core wire of the twisted pair cable passes through the core wire insertion hole of the positioning body;
Figure 13 shows an illustrative view of the core wire cutting device of a twisted pair cable processing system according to an exemplary embodiment of the present invention, wherein the first cable fixture holds the twisted pair cable and moves it axially backward, so that the cutting end face of the outer layer of the twisted pair cable is pressed against the reference positioning surface inside the positioning body;
Figure 14 shows an illustrative view of a core wire cutting device for a twisted pair cable processing system according to an exemplary embodiment of the present invention, wherein an upper cutting blade and a lower cutting blade clamp a pair of core wires of the twisted pair cable and are moved along the axial direction to straighten the pair of core wires;
Figure 15 shows an illustrative view of a core wire cutting device of a twisted pair cable processing system according to an exemplary embodiment of the present invention, in which an upper cutting blade and a lower cutting blade cut the outer insulation layers of a pair of core wires;
Figure 16 shows an illustrative view of a core wire cutting device of a twisted pair cable processing system according to an exemplary embodiment of the present invention, in which an upper cutting blade and a lower cutting blade are moved axially backwards to strip a section of outer insulation layer from a pair of core wires; and
Figure 17 shows an illustrative view of a core wire cutting device for a twisted pair cable processing system according to an exemplary embodiment of the present invention, in which an upper cutting blade and a lower cutting blade cut the exposed core wire conductors of a pair of core wires, so that the pair of exposed core wires of the twisted pair cable have a predetermined length.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a twisted pair cable processing system. The twisted pair cable processing system comprises of: a frame; and a core wire cutting device which is installed on the frame for cutting a pair of exposed and untwisted core wires of a twisted pair cable. The core wire cutting device comprises of: a positioning body which is formed with a cable insertion hole that allows one end of the twisted pair cable to be inserted and a pair of core wire insertion holes that allow the pair of exposed core wires of the twisted pair cable to pass through; and a cutting tool which is set behind the positioning body for cutting the pair of exposed core wires of the twisted pair cable. A positioning reference surface perpendicular to the axial direction of the core wire insertion hole is formed in the cable insertion hole, and the positioning reference surface is used to axially rest against the cutting end face of the outer coating layer of the twisted pair cable to axially position the twisted pair cable and ensure that the pair of exposed core wires of the cut twisted pair cable have a predetermined length.

According to another general concept of the present invention, there is provided a method for cutting a twisted pair cable. The method comprises steps of: providing the above twisted pair cable processing system; using a core wire untwisting device to untwist the pair of exposed core wires of the twisted pair cable; passing the pair of exposed and untwisted core wires of the twisted pair cable through a pair of core wire insertion holes of the positioning body from front to back; using a first cable fixture to clamp the twisted pair cable and moving the twisted pair cable axially backwards, so that the cutting end face of the outer layer of the twisted pair cable is axially pressed against the positioning reference surface inside the positioning body; and using a cutting tool to cut the pair of exposed core wires of the twisted pair cable, so that the length of the pair of exposed core wires of the twisted pair cable is equal to the predetermined length.

According to an aspect of the present invention, there is provided a twisted pair cable processing system. The twisted pair cable processing system comprises of: a frame; and a core wire untwisting device which is installed on the frame for untwisting a pair of exposed core wires of a twisted pair cable. The core wire untwisting device comprises of: an installation plate, fixed to the frame; a rotating wheel which is rotatably mounted on the installation plate and formed with an axial through installation hole; a positioning body which is embedded into the installation hole of the rotating wheel and formed with a pair of core wire insertion holes; and a driver for driving the rotating wheel and the positioning body embedded in the rotating wheel to rotate together. When the ends of the pair of exposed core wires of the twisted pair cable are inserted into the pair of core wire insertion holes, the driver drives the rotating wheel and the positioning body to rotate to unwind the pair of exposed core wires of the twisted pair cable.

According to another aspect of the present invention, there is provided a method for untwisting a twisted pair cable. The method comprises following steps of: providing the above twisted pair cable processing system; inserting the ends of the pair of exposed core wires of the twisted pair cable into the pair of core wire insertion holes of the positioning body; and using the driver to drive the rotating wheel and the positioning body to rotate together, in order to untwist the pair of exposed core wires of the twisted pair cable.

According to another aspect of the present invention, there is provided a method for cutting a twisted pair cable. The method comprises following steps of: providing the above twisted pair cable processing system; passing the pair of exposed and untwisted core wires of the twisted pair cable through the pair of core wire insertion holes of the positioning body from front to back; using the first cable fixture to clamp the twisted pair cable and moving the twisted pair cable axially backwards, so that the cutting end face of the outer layer of the twisted pair cable is axially pressed against the positioning reference surface inside the positioning body; and using a cutting tool to cut the pair of exposed core wires of the twisted pair cable, so that the length of the pair of exposed core wires of the twisted pair cable is equal to a predetermined length.

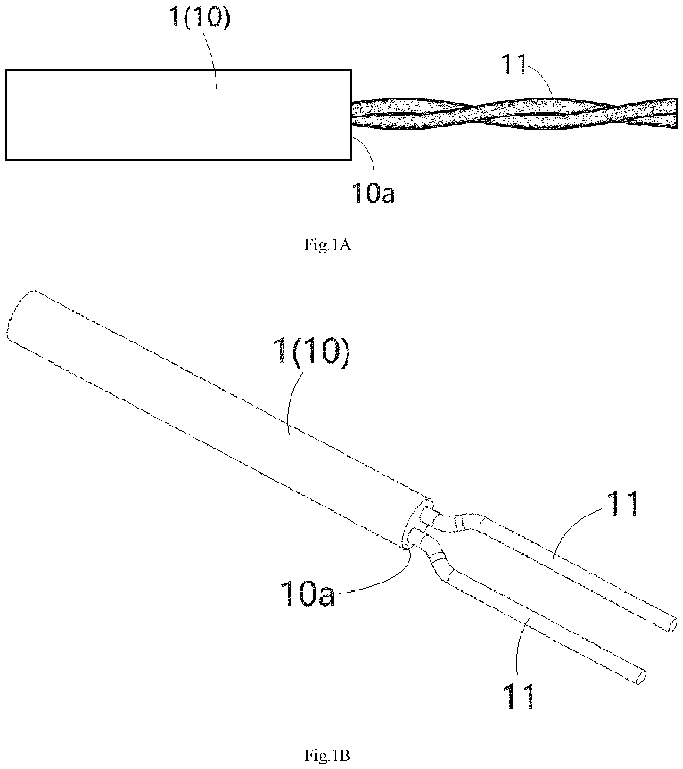

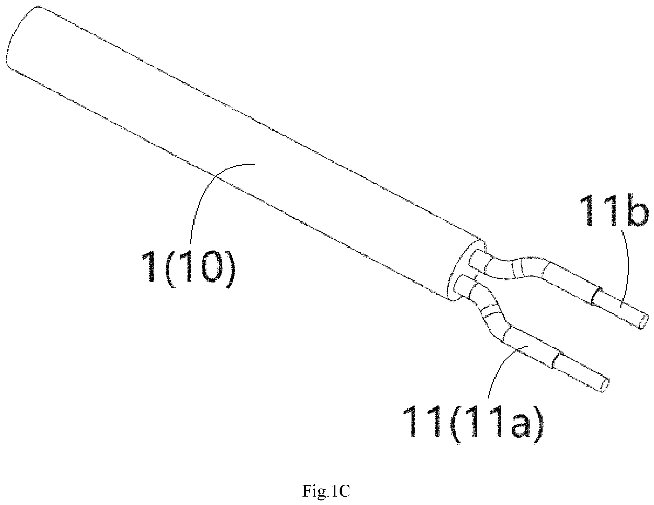

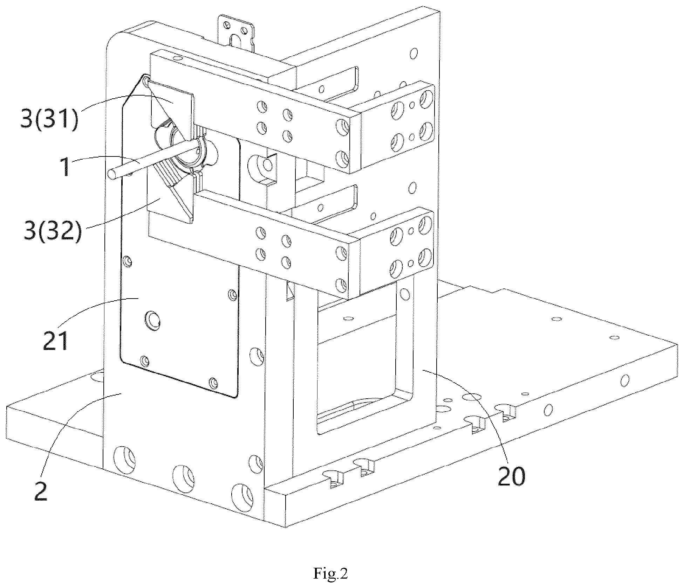

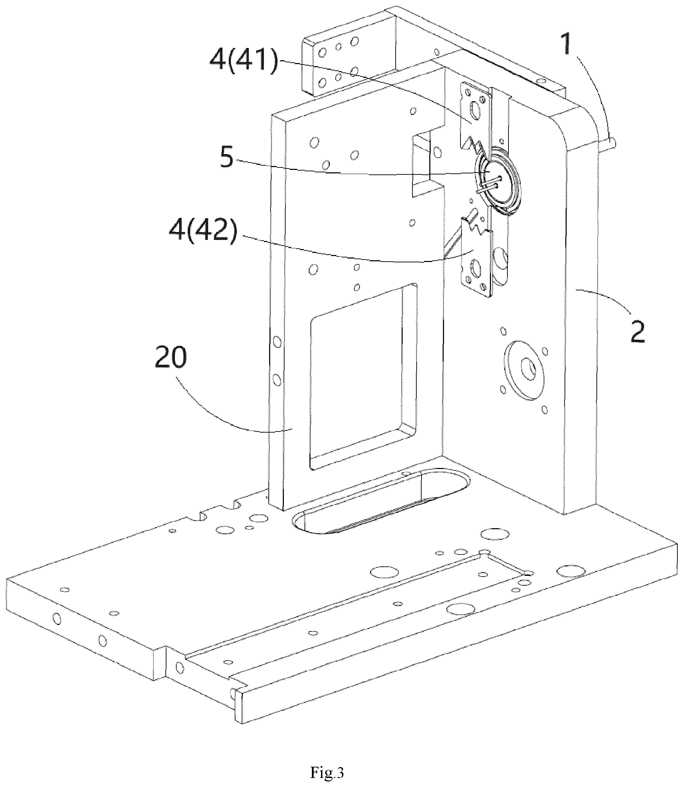

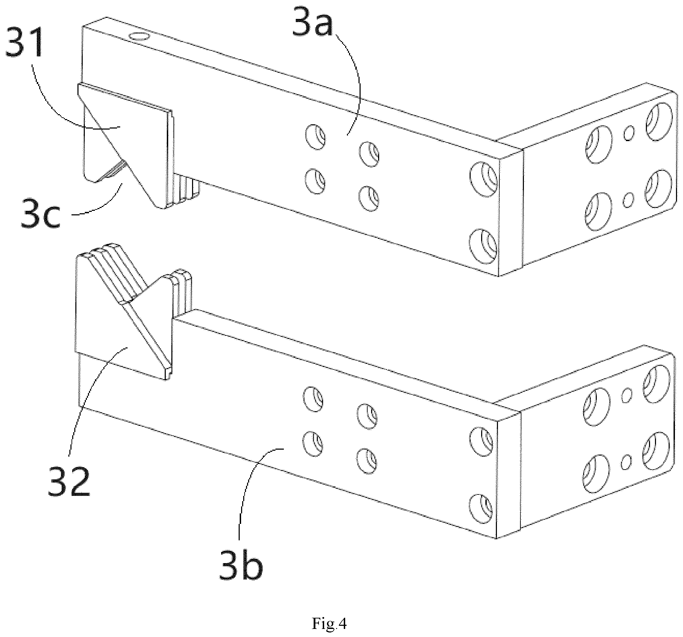

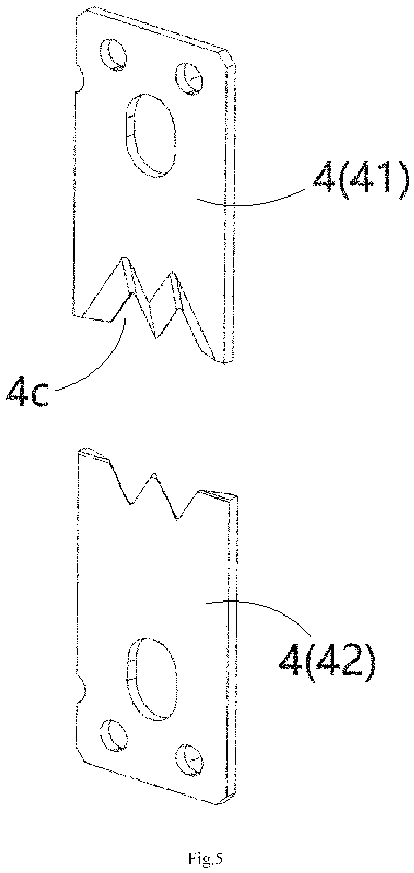

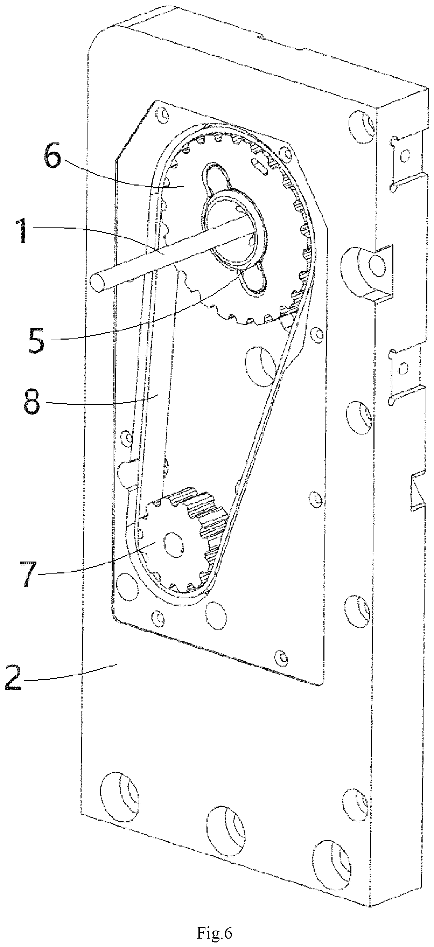

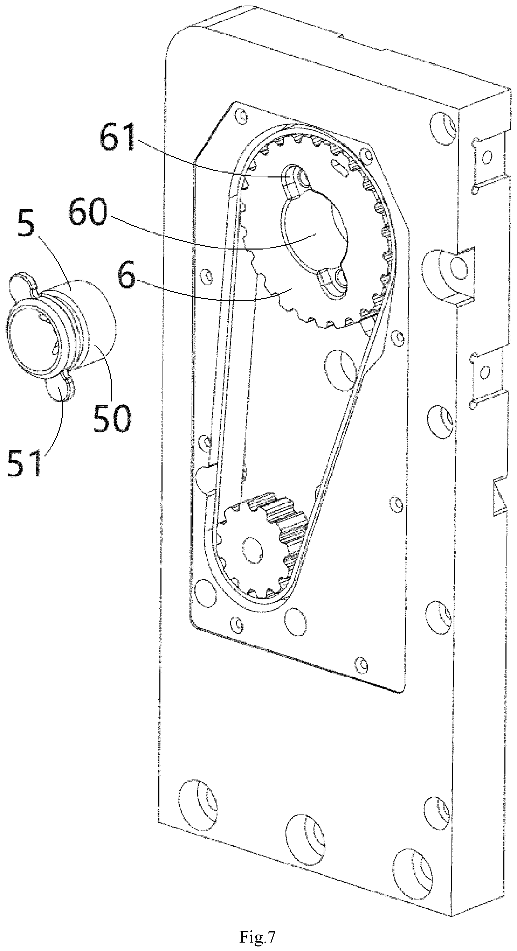

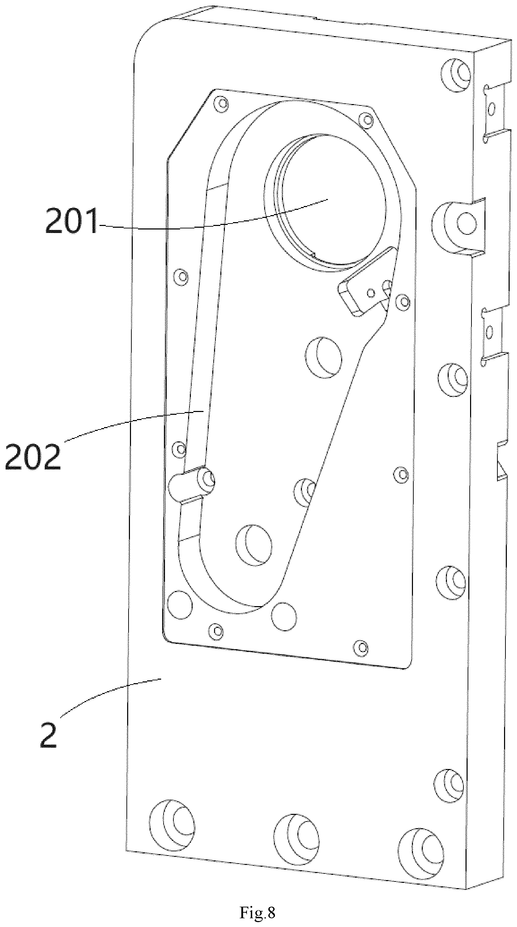

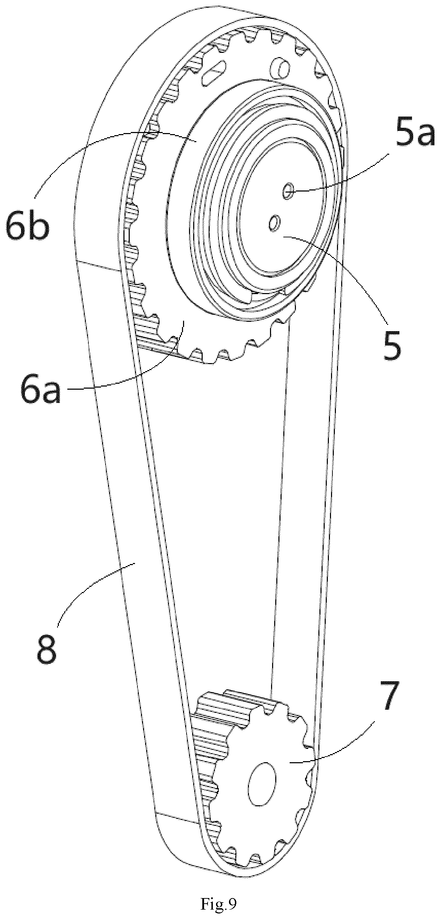

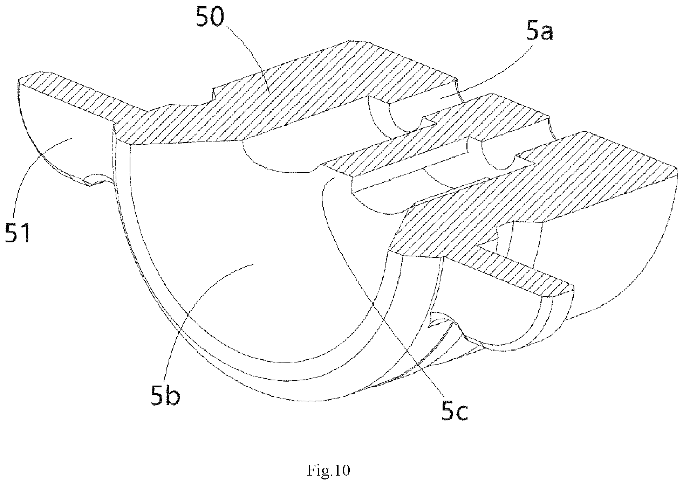

Figure 1A shows an illustrative view of a twisted pair cable 1 according to an exemplary embodiment of the present invention, in which a pair of exposed core wires 11 have not yet been untwisted; Figure 1B shows an illustrative view of a twisted pair cable 1 according to an exemplary embodiment of the present invention, in which a pair of exposed core wires 11 have been untwisted and separated; Figure 1C shows an illustrative view of a twisted pair cable 1 according to an exemplary embodiment of the present invention, in which a pair of exposed core wires 11 have been cut; Figure 2 shows an illustrative view of the core wire untwisting device and core wire cutting device of a twisted pair cable processing system according to an exemplary embodiment of the present invention when viewed from the front side; Figure 3 shows an illustrative view of the core wire untwisting device and core wire cutting device of a twisted pair cable processing system according to an exemplary embodiment of the present invention when viewed from the rear side; Figure 4 shows an illustrative perspective view of the first cable fixture 3 of the core wire cutting device of the twisted pair cable processing system according to an exemplary embodiment of the present invention; Figure 5 shows an illustrative perspective view of the cutting tool 4 of the core wire cutting device of the twisted pair cable processing system according to an exemplary embodiment of the present invention; Figure 6 shows an illustrative perspective view of the core wire untwisting device of a twisted pair cable processing system according to an exemplary embodiment of the present invention, in which the positioning body 5 is embedded in the rotating wheel 6; Figure 7 shows an illustrative perspective view of the core wire untwisting device of a twisted pair cable processing system according to an exemplary embodiment of the present invention, in which the positioning body 5 is pulled out from the rotating wheel 6; Figure 8 shows an illustrative perspective view of the installation plate 2 of the core wire untwisting device of the twisted pair cable processing system according to an exemplary embodiment of the present invention; Figure 9 shows an illustrative perspective view of the core wire untwisting device of a twisted pair cable processing system according to an exemplary embodiment of the present invention; Figure 10 shows a cross-sectional view of the positioning body 5 of the core wire untwisting device of the twisted pair cable processing system according to an exemplary embodiment of the present invention;

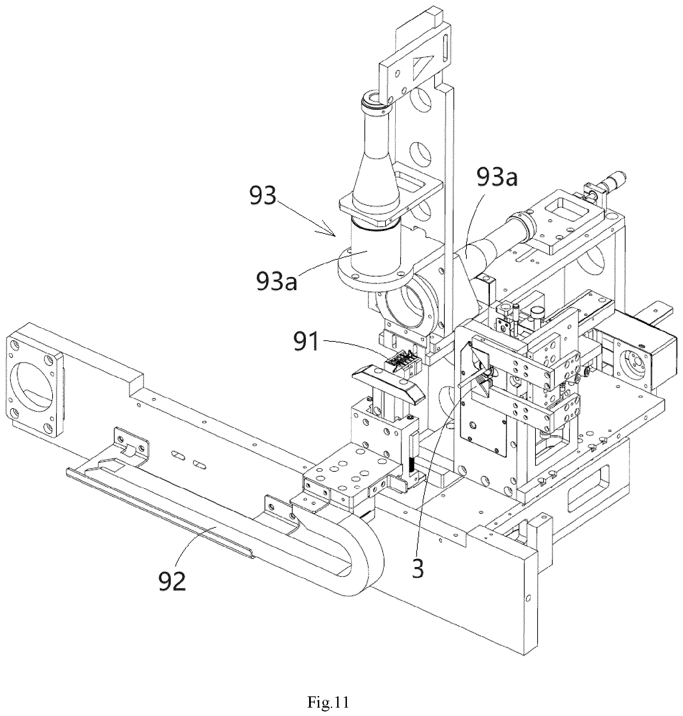

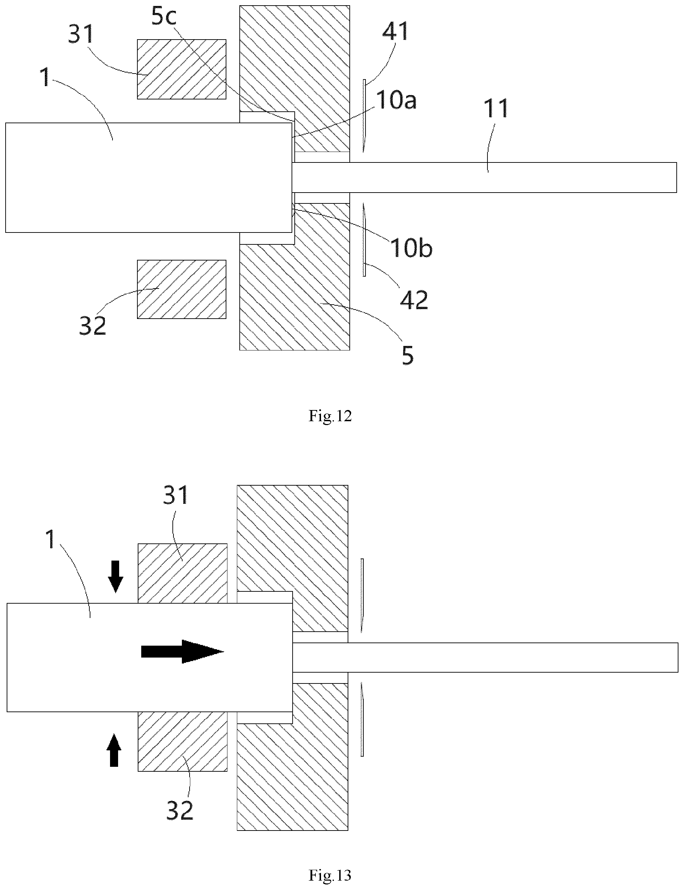

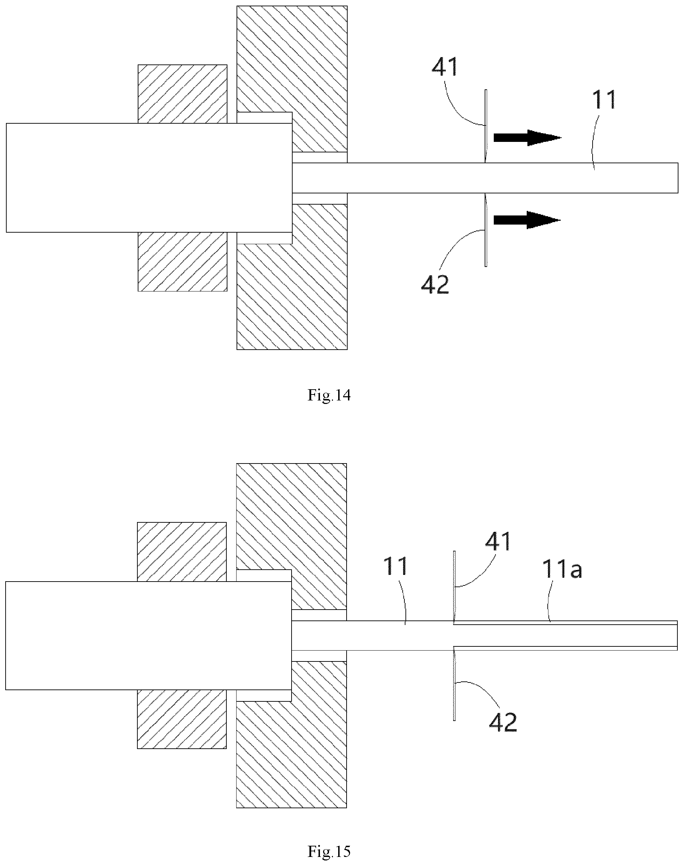

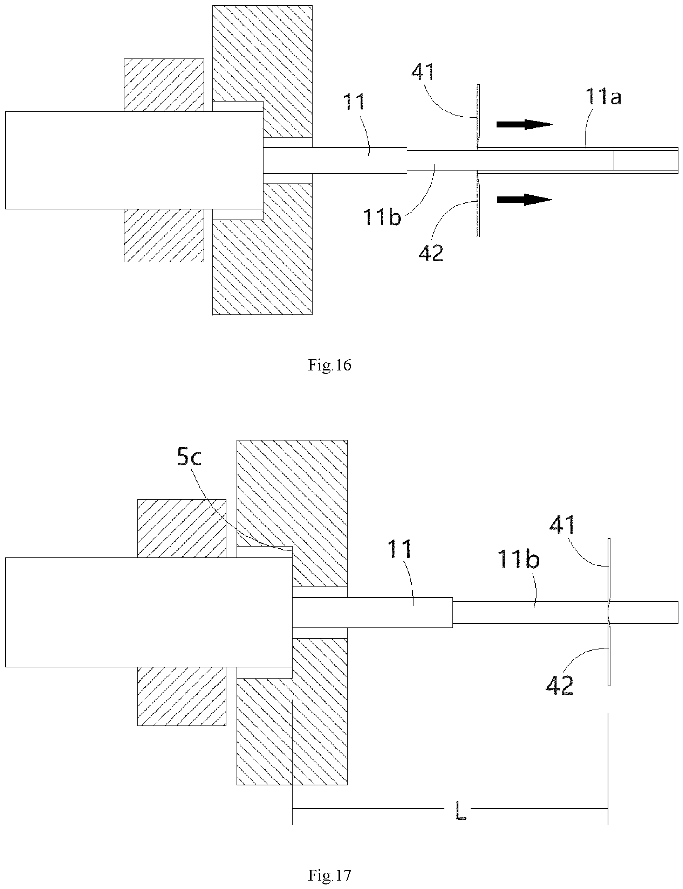

Figure 11 shows an illustrative perspective view of a twisted pair cable processing system according to an exemplary embodiment of the present invention, in which a position detection device 93 is shown; Figure 12 shows an illustrative view of a core wire cutting device of a twisted pair cable processing system according to an exemplary embodiment of the present invention, wherein the core wire 11 of the twisted pair cable 1 passes through the core wire insertion hole 5a of the positioning body 5; Figure 13 shows an illustrative view of a core wire cutting device of a twisted pair cable processing system according to an exemplary embodiment of the present invention, wherein the first cable fixture 3 holds the twisted pair cable 1 and moves the twisted pair cable 1 axially backward, so that the cutting end face 10a of the outer layer 10 of the twisted pair cable 1 is pressed against the reference positioning surface 5c inside the positioning body 5; Figure 14 shows an illustrative view of a core wire cutting device of a twisted pair cable processing system according to an exemplary embodiment of the present invention, in which an upper cutting blade 41 and a lower cutting blade 42 clamp a pair of core wires 11 of the twisted pair cable 1 and are moved along the axial direction to straighten the pair of core wires 11; Figure 15 shows an illustrative view of a core wire cutting device of a twisted pair cable processing system according to an exemplary embodiment of the present invention, in which an upper cutting blade 41 and a lower cutting blade 42 cut the outer insulation layer 11a of a pair of core wires 11; Figure 16 shows an illustrative view of a core wire cutting device of a twisted pair cable processing system according to an exemplary embodiment of the present invention, in which an upper cutting blade 41 and a lower cutting blade 42 are moved axially backwards to strip a section of outer insulation layer 11a from a pair of core wires 11; Figure 17 shows an illustrative view of a core wire cutting device for a twisted pair cable processing system according to an exemplary embodiment of the present invention, wherein an upper cutting blade 41 and a lower cutting blade 42 cut the exposed core wire conductors 11b of a pair of core wires 11, so that the pair of exposed core wires 11 of the twisted pair cable 11 have a predetermined length L.

As shown in Figures 1 to 17, in an exemplary embodiment of the present invention, a twisted pair cable processing system is disclosed. The twisted pair cable processing system includes a frame 20 and a core wire cutting device. The core wire cutting device is installed on the frame 20 for cutting a pair of exposed and untwisted core wires 11 of the twisted pair cable 1. The core wire cutting device includes a positioning body 5, which is formed with a cable insertion hole 5b allowing one end of the twisted pair cable 1 to be inserted and a pair of core wire insertion holes 5a allowing a pair of exposed core wires 11 of the twisted pair cable 1 to pass through. The cutting tool 4 is set behind the positioning body 5 and is used to cut the pair of exposed core wires 11 of the twisted pair cable 1. A positioning reference surface 5c is formed in the cable insertion hole 5b, which is perpendicular to the axial direction of the core wire insertion hole 5a. This positioning reference surface 5c is used to axially rest against the cutting end surface 10a of the outer layer 10 of the twisted pair cable 1, to axially position the twisted pair cable 1 and ensure that the pair of exposed core wires 11 of the cut twisted pair cable 1 have a predetermined length L.

As shown in Figures 1 to 17, in the illustrated embodiment, the core wire cutting device further comprises a first cable fixture 3 and a fixture moving device (not shown). The first cable fixture 3 is set in front of the positioning body 5, used to clamp the twisted pair cable 1. The fixture moving device is installed on the frame 20 for moving the first cable fixture 3. Before cutting the pair of core wires 11 of the twisted pair cable 1, the fixture moving device moves the first cable fixture 3 axially backwards, so that the cutting end face 10a of the outer layer 10 of the twisted pair cable 1 clamped by the first cable fixture 3 is axially pressed against the positioning reference surface 5c.

As shown in Figures 1 to 17, in the illustrated embodiment, the first cable fixture 3 includes a first movable frame 3a and a second movable frame 3b, as well as a first clamping block 31 and a second clamping block 32. The first movable frame 3a and the second movable frame 3b can be moved in the axial direction and a vertical direction perpendicular to the axial direction. The first clamping block 31 and the second clamping block 32 are respectively installed on the first movable frame 3a and the second movable frame 3b. The fixture moving device is connected to the first movable frame 3a and the second movable frame 3b, and is used to drive the first movable frame 3a and the second movable frame 3b to move in the axial and vertical directions.

As shown in Figures 1 to 17, in the illustrated embodiment, the fixture moving device includes a first vertical moving device (not shown), a second vertical moving device (not shown), and an axial moving device (not shown). The first vertical moving device is connected to the first movable frame 3a and is used to drive the first movable frame 3a to move in the vertical direction. The second vertical moving device is connected to the second movable frame 3b and is used to drive the second movable frame 3b to move in the vertical direction. The axial moving device is connected to the first vertical moving device and the second vertical moving device, and is used to drive the first vertical moving device and the second vertical moving device to move along the axial direction. The first vertical moving device, the second vertical moving device, and the axial moving device may include cylinders or electric cylinders.

As shown in Figures 1 to 17, in the illustrated embodiment, the first vertical moving device and the second vertical moving device are used to drive the first clamping block 31 and the second clamping block 32 to move synchronously in the vertical direction to clamp or release the twisted pair cable 1. The axial moving device is used to drive the first clamping block 31 and the second clamping block 32 to synchronously move backward in the axial direction, so that the cutting end face 10a of the outer layer 10 of the clamped twisted pair cable 1 is axially pressed against the positioning reference surface 5c.

As shown in Figures 1 to 17, in the illustrated embodiment, V-shaped grooves 3c are formed on the first clamping block 31 and the second clamping block 32, respectively. The twisted pair cable 1 is suitable for being clamped in the V-shaped grooves 3c of the first clamping block 31 and the second clamping block 32.

As shown in Figures 1 to 17, in the illustrated embodiment, the core wire cutting device further includes a tool moving device (not shown). The tool moving device is installed on the frame 20 for moving the cutting tool 4. After the cutting end face 10a of the outer layer 10 of the twisted pair cable 1 is axially pressed against the positioning reference surface 5c, the tool moving device moves the cutting tool 4 in the vertical direction to cut the pair of exposed core wires 11 of the twisted pair cable 1.

As shown in Figures 1 to 17, in the illustrated embodiment, the cutting tool 4 includes an upper cutting blade 41 and a lower cutting blade 42 that are vertically opposed to each other. The tool moving device is adapted to synchronously move the upper cutting blade 41 and the lower cutting blade 42 along the vertical direction to cut the pair of exposed core wires 11 of the twisted pair cable 1.

As shown in Figures 1 to 17, in the illustrated embodiment, the tool moving device includes a first moving device (not shown), a second moving device (not shown), and a third moving device (not shown). The first moving device is connected to the upper cutting blade 41 and is used to drive the upper cutting blade 41 to move in the vertical direction. The second moving device is connected to the lower cutting blade 42 and is used to drive the lower cutting blade 42 to move in the vertical direction. The third moving device is connected to the first and second moving devices, and is used to drive the first and second moving devices, as well as the first and second cutting blades 41, 42, to move axially.

As shown in Figures 1 to 17, in the illustrated embodiment, a pair of V-shaped cutting grooves 4c are formed on the upper cutting blade 41 and the lower cutting blade 42, respectively. The pair of V-shaped cutting grooves 4c correspond to the pair of core wires 11 and are used for positioning and cutting the pair of core wires 11.

As shown in Figures 1 to 17, in the illustrated embodiment, the twisted pair cable processing system further includes a second cable fixture 91, a position detection device 93, a cable moving device 92, and a position compensation device (not shown, which is a closed-loop control system). The second cable fixture 91 is used to clamp the twisted pair cable 1 cut by the core wire cutting device. The position detection device 93 is installed at the position detection station to detect the position of the pair of exposed core wires 11 of the twisted pair cable 1. The cable moving device 92 is used to move the second cable fixture 91 in a horizontal direction perpendicular to the axial direction, in order to move the twisted pair cable 1 to the position detection station and the subsequent terminal crimping station. The position compensation device controls the movement distance of the cable moving device 92 based on the difference between the actual position of the pair of core wires 11 detected by the position detection device 93 and the preset position of the pair of core wires 11, in order to accurately move the pair of core wires 11 of the twisted pair cable 1 to the terminal crimping station.

As shown in Figures 1 to 17, in the illustrated embodiment, the position detection device 93 includes a camera 93a and a computing device (not shown). The camera 93a is used to capture images of the pair of exposed core wires 11 of the twisted pair cable 1. The computing device is used to calculate the position of the pair of core wires 11 based on the images captured by the camera 93a.

As shown in Figures 1 to 17, in the illustrated embodiment, the twisted pair cable processing system also includes a core wire untwisting device. The core wire untwisting device is installed on the frame 20 to untwist the pair of exposed core wires 11 of the twisted pair cable 1.

As shown in Figures 1 to 17, in the illustrated embodiment, the core wire untwisting device includes: an installation plate 2, a rotating wheel 6, a positioning body 5, and a driver (not shown, for example, it may include a servo motor). The installation plate 2 is fixed to the frame 20. The rotating wheel 6 is rotatably mounted on the installation plate 2 and formed with an axial through installation hole 60. The positioning body 5 is embedded into the installation hole 60 of the rotating wheel 6 and formed with a pair of core wire insertion holes 5a. The driver is used to drive the rotating wheel 6 and the positioning body 5 embedded in the rotating wheel 6 to rotate together. When the ends of the pair of exposed core wires 11 of the twisted pair cable 1 are inserted into the pair of core wire insertion holes 5a, the driver drives the rotating wheel 6 and the positioning body 5 to rotate, in order to untwist the pair of exposed core wires 11 of the twisted pair cable 1.

As shown in Figures 1 to 17, in the illustrated embodiment, the rotating wheel 6 includes a wheel body 6a and a pivot shaft part 6b. The wheel body 6a has axially opposite front and rear sides. The pivot shaft part 6b is connected to the rear side of the wheel body 6a. A pivot hole 201 is formed in the installation plate 2, and the pivot shaft part 6b is rotatably mounted into the pivot hole 201, so that the rotating wheel 6 can be rotated around the axis of the pivot hole 201.

As shown in Figures 1 to 17, in the illustrated embodiment, the positioning body 5 includes a main body 50 and a pair of ears 51. The main body 50 is cylindrical and embedded in the installation hole 60. The pair of ears 51 are connected to the main body 50 and face each other radially in the main body 50. A pair of positioning grooves 61 are formed on the rotating wheel 6, and the pair of ears 51 of the positioning body 5 are embedded in the pair of positioning grooves 61, so that the positioning body 5 cannot be rotated relative to the rotating wheel 6.

As shown in Figures 1 to 17, in the illustrated embodiment, the core wire untwisting device further comprises a driving wheel 7 and a transmission belt 8. The driving wheel 7 is rotatably mounted onto the installation plate 2. The transmission belt 8 is connected between the rotating wheel 6 and the driving wheel 7. The driver is connected to the driving wheel 7 and is used to drive the driving wheel 7 to rotate, so as to drive the rotating wheel 6 to rotate through the driving wheel 7 and the transmission belt 8.

As shown in Figures 1 to 17, in the illustrated embodiment, a receiving recess 202 is formed on the front side of the installation plate 2, and the rotating wheel 6, driving wheel 7, and transmission belt 8 are accommodated in the receiving recess 202. The core wire untwisting device also includes a front cover plate 21, which is installed on the opening of the accommodating recess 202 to cover the opening of the accommodating recess 202.

As shown in Figures 1 to 17, in an exemplary embodiment of the present invention, a method for cutting the twisted pair cables is also disclosed. The method for cutting the twisted pair cable includes the following steps:
S11: providing the aforementioned twisted pair cable processing system;
S12: using a core wire untwisting device to untwist the pair of exposed core wires 11 of the twisted pair cable 1;
S13: passing the pair of exposed and untwisted core wires 11 of the twisted pair cable 1 through the pair of core wire insertion holes 5a of the positioning body 5 from front to back;
S14: using the first cable fixture 3 to clamp the twisted pair cable 1 and move it axially backwards, so that the cutting end face 10a of the outer layer 10 of the twisted pair cable 1 is axially pressed against the positioning reference surface 5c inside the positioning body 5; and
S15: using the cutting tool 4 to cut the pair of exposed core wires 11 of twisted pair cable 1, so that the length of the pair of exposed core wires 11 of twisted pair cable 1 is equal to the predetermined length L.

As shown in Figure 12, in the illustrated embodiment, the cutting end face 10a of the outer layer 10 of the actual cable 1 is not flat, for example, there is a protrusion 10b as shown in the diagram. The protrusion 10b will rest against the positioning reference surface 5c, resulting in a gap between the cutting end face 10a of the outer layer 10 of cable 1 and the positioning reference surface 5c. To eliminate this gap, a predetermined axial thrust must be applied to the cable 1 to push and adhere the cutting end face 10a of the outer layer 10 of cable 1 to the positioning reference surface 5c. In the illustrated embodiment, the first cable fixture 3 can apply a predetermined axial thrust on the cable 1, thereby eliminating the influence of the aforementioned gap and enabling the cable 1 to be accurately positioned at the predetermined position.

As shown in Figures 1 to 17, in the illustrated embodiment, the aforementioned step S15 includes:
S151: The upper cutting blade 41 and lower cutting blade 42 of cutting tool 4 clamp the roots of the pair of core wires 11 and are moved axially backwards to straighten the pair of core wires 11 through the upper cutting blade 41 and lower cutting blade 42;
S152: The upper cutting blade 41 and lower cutting blade 42 of cutting tool 4 are moved to the predetermined cutting position of the outer insulation layer and cut the outer insulation layer 11a of the pair of core wires 11;
S153: The upper cutting blade 41 and lower cutting blade 42 of cutting tool 4 are moved axially backwards to strip a section of outer insulation layers 11a from the pair of core wires 11; and
S154: The upper cutting blade 41 and lower cutting blade 42 of cutting tool 4 are moved to the predetermined core wire conductor cutting position and cut the exposed core wire conductors 11b of the pair of core wires 11.

As shown in Figures 1 to 17, in an exemplary embodiment of the present invention, a twisted pair cable processing system is also disclosed. The twisted pair cable processing system includes a frame 20 and a core wire untwisting device. The core wire untwisting device is installed on the frame 20 to untwist the pair of exposed core wires 11 of the twisted pair cable 1. The core wire untwisting device includes: an installation plate 2, a rotating wheel 6, a positioning body 5, and a driver. The installation plate 2 is fixed to the frame 20. The rotating wheel 6 is rotatably mounted on the installation plate 2 and formed with an axial through installation hole 60. The positioning body 5 is embedded into the installation hole 60 of the rotating wheel 6 and formed with a pair of core wire insertion holes 5a. The driver is used to drive the rotating wheel 6 and the positioning body 5 embedded in the rotating wheel 6 to rotate together. When the ends of the pair of exposed core wires 11 of the twisted pair cable 1 are inserted into the pair of core wire insertion holes 5a, the driver drives the rotating wheel 6 and the positioning body 5 to rotate, in order to untwist the pair of exposed core wires 11 of the twisted pair cable 1.

As shown in Figures 1 to 17, in the illustrated embodiment, the rotating wheel 6 includes a wheel body 6a and a pivot shaft part 6b. The wheel body 6a has axially opposite front and rear sides. The pivot shaft part 6b is connected to the rear side of the wheel body 6a. A pivot hole 201 is formed in the installation plate 2, and the pivot shaft part 6b is rotatably mounted into the pivot hole 201, so that the rotating wheel 6 can be rotated around the axis of the pivot hole 201.

As shown in Figures 1 to 17, in the illustrated embodiment, the positioning body 5 includes a main body 50 and a pair of ears 51. The main body 50 is embedded in the installation hole 60. The pair of ears 51 are connected to the main body 50 and face each other radially in the main body 50. A pair of positioning grooves 61 are formed on the rotating wheel 6, and the pair of ears 51 of the positioning body 5 are embedded in the pair of positioning grooves 61, so that the positioning body 5 cannot be rotated relative to the rotating wheel 6.

As shown in Figures 1 to 17, in the illustrated embodiment, the core wire untwisting device further comprises a driving wheel 7 and a transmission belt 8. The driving wheel 7 is rotatably mounted onto the installation plate 2. The transmission belt 8 is connected between the rotating wheel 6 and the driving wheel 7. The driver is connected to the driving wheel 7 and is used to drive the driving wheel 7 to rotate, so as to drive the rotating wheel 6 to rotate through the driving wheel 7 and the transmission belt 8.

As shown in Figures 1 to 17, in the illustrated embodiment, a receiving recess 202 is formed on the front side of the installation plate 2, and the rotating wheel 6, the driving wheel 7, and the transmission belt 8 are accommodated in the receiving recess 202. The core wire untwisting device also includes a front cover plate 21, which is installed on the opening of the accommodating recess 202 to cover the opening of the accommodating recess 202.

As shown in Figures 1 to 17, in the illustrated embodiment, a cable insertion hole 5b is formed in the positioning body 5 to allow one end of the twisted pair cable 1 to be inserted. The pair of core wire insertion holes 5a are communicated with the cable insertion hole 5b. A positioning reference surface 5c is formed in the cable insertion hole 5b, which is perpendicular to the axial direction of the core wire insertion hole 5a. The positioning reference surface 5c is used to axially rest against the cutting end surface 10a of the outer layer 10 of the twisted pair cable 1 to position the twisted pair cable 1 axially.

As shown in Figures 1 to 17, in the illustrated embodiment, the twisted pair cable processing system further includes a core wire cutting device, which is installed on the frame 20 for cutting the pair of exposed and untwisted core wires 11 of the twisted pair cable 1, so that the pair of exposed core wires 11 of the twisted pair cable 1 has a predetermined length L. Before cutting the pair of core wires 11 of the twisted pair cable 1, the cutting end face 10a of the outer layer 10 of the twisted pair cable 1 is axially pressed against the positioning reference surface 5c to accurately position the twisted pair cable 1 in the axial direction.

As shown in Figures 1 to 17, in the illustrated embodiment, the core wire cutting device includes a first cable fixture 3, a fixture moving device (not shown), and a cutting tool 4. The first cable fixture 3 is set in front of the installation plate 2, used to clamp the twisted pair cable 1. The fixture moving device is installed on the frame 20 for moving the first cable fixture 3. The cutting tool 4 is set behind the installation plate 2 and is used to cut the pair of exposed core wires 11 of the twisted pair cable 1. Before cutting the pair of core wires 11 of the twisted pair cable 1, the fixture moving device moves the first cable fixture 3 axially backwards, so that the cutting end face 10a of the outer layer 10 of the twisted pair cable 1 clamped by the first cable fixture 3 is axially pressed against the positioning reference surface 5c.

As shown in Figures 1 to 17, in the illustrated embodiment, the first cable fixture 3 includes a first movable frame 3a and a second movable frame 3b, as well as a first clamping block 31 and a second clamping block 32. The first movable frame 3a and the second movable frame 3b can be moved in the axial direction and a vertical direction perpendicular to the axial direction. The first clamping block 31 and the second clamping block 32 are respectively installed on the first movable frame 3a and the second movable frame 3b. The fixture moving device is connected to the first movable frame 3a and the second movable frame 3b, and is used to drive the first movable frame 3a and the second movable frame 3b to move in the axial and vertical directions.

As shown in Figures 1 to 17, in the illustrated embodiment, the fixture moving device comprises a first vertical moving device, a second vertical moving device, and an axial moving device. The first vertical moving device is connected to the first movable frame 3a and is used to drive the first movable frame 3a to move in the vertical direction. The second vertical moving device is connected to the second movable frame 3b and is used to drive the second movable frame 3b to move in the vertical direction. The axial moving device is connected to the first vertical moving device and the second vertical moving device, and is used to drive the first vertical moving device and the second vertical moving device to move along the axial direction.

As shown in Figures 1 to 17, in the illustrated embodiment, the first vertical moving device and the second vertical moving device are used to drive the first clamping block 31 and the second clamping block 32 to move synchronously in the vertical direction to clamp or release the twisted pair cable 1. The axial moving device is used to drive the first clamping block 31 and the second clamping block 32 to synchronously move backward in the axial direction, so that the cutting end face 10a of the outer layer 10 of the clamped twisted pair cable 1 is axially pressed against the positioning reference surface 5c.

As shown in Figures 1 to 17, in the illustrated embodiment, V-shaped grooves 3c are formed on the first clamping block 31 and the second clamping block 32, respectively. The twisted pair cable 1 is suitable for being clamped in the V-shaped grooves 3c of the first clamping block 31 and the second clamping block 32.

As shown in Figures 1 to 17, in the illustrated embodiment, the core wire cutting device further includes a tool moving device. The tool moving device is installed on the frame 20 for moving a cutting tool 4. After the cutting end face 10a of the outer layer 10 of the twisted pair cable 1 is axially pressed against the positioning reference surface 5c, the tool moving device moves the cutting tool 4 in the vertical direction to cut the pair of exposed core wires 11 of the twisted pair cable 1.

As shown in Figures 1 to 17, in the illustrated embodiment, the cutting tool 4 includes an upper cutting blade 41 and a lower cutting blade 42 that are vertically opposed to each other. The tool moving device is adapted to synchronously move the upper cutting blade 41 and the lower cutting blade 42 along the vertical direction to cut the pair of exposed core wires 11 of the twisted pair cable 1.

As shown in Figures 1 to 17, in the illustrated embodiment, the tool moving device includes a first moving device, a second moving device, and a third moving device. The first moving device is connected to the upper cutting blade 41 and is used to drive the upper cutting blade 41 to move in the vertical direction. The second moving device is connected to the lower cutting blade 42 and is used to drive the lower cutting blade 42 to move in the vertical direction. The third moving device is connected to the first and second moving devices, and is used to drive the first and second moving devices, as well as the first and second cutting blades 41, 42, to move axially.

As shown in Figures 1 to 17, in the illustrated embodiment, a pair of V-shaped cutting grooves 4c are formed on the upper cutting blade 41 and the lower cutting blade 42, respectively. The pair of V-shaped cutting grooves 4c correspond to the pair of core wires 11 and are used for positioning and cutting the pair of core wires 11.

As shown in Figures 1 to 17, in the illustrated embodiment, the twisted pair cable processing system further includes a second cable fixture 91, a position detection device 93, a cable moving device 92, and a position compensation device. The second cable fixture 91 is used to clamp the twisted pair cable 1 cut by the core wire cutting device. The position detection device 93 is installed at the position detection station to detect the position of the pair of exposed core wires 11 of the twisted pair cable 1. The cable moving device 92 is used to move the second cable fixture 91 in a horizontal direction perpendicular to the axial direction, in order to move the twisted pair cable 1 to the position detection station and the subsequent terminal crimping station. The position compensation device controls the movement distance of the cable moving device 92 based on the difference between the actual position of the pair of core wires 11 detected by the position detection device 93 and the preset position of the pair of core wires 11, in order to accurately move the pair of core wires 11 of the twisted pair cable 1 to the terminal crimping station.

As shown in Figures 1 to 17, in the illustrated embodiment, the position detection device 93 includes a camera 93a and a computing device. the camera 93a is used to capture images of the pair of exposed core wires 11 of twisted pair cable 1. The computing device is used to calculate the position of the pair of core wires 11 based on the images captured by the camera 93a.

As shown in Figures 1 to 17, in another exemplary embodiment of the present invention, a method for untwisting the twisted pair cable is also disclosed. The method of untwisting the twisted pair cable includes the following steps:
S21: providing the aforementioned twisted pair cable processing system;
S22: inserting the ends of the pair of exposed core wires 11 of the twisted pair cable 1 into the pair of core wire insertion holes 5a of the positioning body 5; and
S23: using a driver to drive the rotating wheel 6 and the positioning body 5 to rotate together, in order to untwist the pair of exposed core wires 11 of the twisted pair cable 1.

As shown in Figures 1 to 17, in another exemplary embodiment of the present invention, a method for cutting the twisted pair cable is also disclosed. The method for cutting the twisted pair cable includes the following steps:
S31: providing the aforementioned twisted pair cable processing system;
S32: passing the pair of exposed and untwisted core wires 11 of the twisted pair cable 1 through the pair of core wire insertion holes 5a of the positioning body 5 from front to back;
S33: using the first cable fixture 3 to clamp the twisted pair cable 1 and move it axially backwards, so that the cutting end face 10a of the outer layer 10 of the twisted pair cable 1 is axially pressed against the positioning reference surface 5c inside the positioning body 5; and
S34: using the cutting tool 4 to cut the pair of exposed core wires 11 of twisted pair cable 1, so that the length of the pair of exposed core wires 11 of twisted pair cable 1 is equal to the predetermined length L.

As shown in Figures 1 to 17, in the illustrated embodiment, the aforementioned step S34 includes:
S341: The upper cutting blade 41 and the lower cutting blade 42 of the cutting tool 4 clamp the roots of the pair of core wires 11 and are moved axially backwards to straighten the pair of core wires 11 through the upper cutting blade 41 and the lower cutting blade 42;
S342: The upper cutting blade 41 and lower cutting blade 42 of the cutting tool 4 are moved to the predetermined cutting position of the outer insulation layer and cut the outer insulation layer 11a of the pair of core wires 11;
S343: The upper cutting blade 41 and lower cutting blade 42 of cutting tool 4 are moved axially backwards to strip a section of outer insulation layers 11a from the pair of core wires 11; and
S344: The upper cutting blade 41 and lower cutting blade 42 of the cutting tool 4 are moved to the predetermined core wire conductor cutting position and cut the exposed core wire conductors 11b of the pair of core wires 11.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A twisted pair cable processing system, comprising:
a frame (20); and
a core wire cutting device which is installed on the frame (20) for cutting a pair of exposed and untwisted core wires (11) of a twisted pair cable (1),
wherein the core wire cutting device comprises:
a positioning body (5) which is formed with a cable insertion hole (5b) that allows one end of the twisted pair cable (1) to be inserted and a pair of core wire insertion holes (5a) that allow the pair of exposed core wires (11) of the twisted pair cable (1) to pass through; and
a cutting tool (4) which is set behind the positioning body (5) for cutting the pair of exposed core wires (11) of the twisted pair cable (1),
wherein a positioning reference surface (5c) perpendicular to the axial direction of the core wire insertion hole (5a) is formed in the cable insertion hole (5b), and the positioning reference surface (5c) is used to axially rest against the cutting end face (10a) of the outer coating layer (10) of the twisted pair cable (1) to axially position the twisted pair cable (1) and ensure that the pair of exposed core wires (11) of the cut twisted pair cable (1) have a predetermined length (L).

2. The twisted pair cable processing system according to claim 1,
wherein the core wire cutting device further comprises:
a first cable fixture (3) which is set in front of the positioning body (5) for clamping the twisted pair cable (1); and
a fixture moving device installed on the frame (20) for moving the first cable fixture (3),
wherein before cutting the pair of core wires (11) of the twisted pair cable (1), the fixture moving device moves the first cable fixture (3) axially backward, so that the cutting end face (10a) of the outer layer (10) of the twisted pair cable (1) clamped by the first cable fixture (3) is axially pressed against the positioning reference surface (5c).

3. The twisted pair cable processing system according to claim 2,
wherein the first cable fixture (3) comprises:
a first movable frame (3a) and a second movable frame (3b) which are capable of moving along the axial direction and a vertical direction perpendicular to the axial direction; and
a first clamping block (31) and a second clamping block (32) which are respectively installed on the first movable frame (3a) and the second movable frame (3b),
wherein the fixture moving device is connected to the first movable frame (3a) and the second movable frame (3b), and is used to drive the first movable frame (3a) and the second movable frame (3b) to move along the axial direction and the vertical direction.

4. The twisted pair cable processing system according to claim 3,
wherein the fixture moving device comprises:
a first vertical moving device which is connected to the first movable frame (3a) and used to drive the first movable frame (3a) to move in the vertical direction;
a second vertical moving device which is connected to the second movable frame (3b) and used to drive the second movable frame (3b) to move in the vertical direction; and
an axial moving device which is connected to the first vertical moving device and the second vertical moving device, for driving the first vertical moving device and the second vertical moving device to move along the axial direction,
wherein the first vertical moving device and the second vertical moving device are used to drive the first clamping block (31) and the second clamping block (32) to move synchronously in the vertical direction to clamp or release the twisted pair cable (1);
wherein the axial moving device is used to drive the first clamping block (31) and the second clamping block (32) to synchronously move backward along the axial direction, so that the cutting end face (10a) of the outer layer (10) of the clamped twisted pair cable (1) is axially pressed against the positioning reference surface (5c).

5. The twisted pair cable processing system according to claim 3,
wherein V-shaped grooves (3c) are respectively formed on the first clamping block (31) and the second clamping block (32), and the twisted pair cable (1) is suitable for being clamped in the V-shaped grooves (3c) of the first clamping block (31) and the second clamping block (32).

6. The twisted pair cable processing system according to claim 2,
wherein the core wire cutting device further comprises:
a tool moving device which is installed on the frame (20) for moving the cutting tool (4),
wherein after the cutting end face (10a) of the outer layer (10) of the twisted pair cable (1) is axially pressed against the positioning reference surface (5c), the tool moving device moves the cutting tool (4) in the vertical direction to cut the pair of exposed core wires (11) of the twisted pair cable (1).

7. The twisted pair cable processing system according to claim 6,
wherein the cutting tool (4) comprises an upper cutting blade (41) and a lower cutting blade (42) facing each other in the vertical direction, and the tool moving device is adapted to synchronously move the upper cutting blade (41) and the lower cutting blade (42) along the vertical direction to cut the pair of exposed core wires (11) of the twisted pair cable (1);
wherein a pair of V-shaped cutting grooves (4c) are respectively formed on the upper cutting blade (41) and the lower cutting blade (42), and the pair of V-shaped cutting grooves (4c) correspond to the pair of core wires (11) for positioning and cutting the pair of core wires (11).

8. The twisted pair cable processing system according to claim 7,
wherein the tool moving device comprises:
a first moving device which is connected to the upper cutting blade (41) and is used to drive the upper cutting blade (41) to move in the vertical direction;
a second moving device which is connected to the lower cutting blade (42) and is used to drive the lower cutting blade (42) to move in the vertical direction; and
a third moving device which is connected to the first moving device and the second moving device, and is used to drive the first and second moving devices and the first and second cutting blades (41, 42) to move along the axial direction.

9. The twisted pair cable processing system according to claim 2, further comprising:
a second cable fixture (91) which is used to clamp the twisted pair cable (1) cut by the core wire cutting device;
a position detection device (93) which is installed at the position detection station to detect the position of the pair of exposed core wires (11) of the twisted pair cable (1);
a cable moving device (92) which is used to move the second cable fixture (91) in a horizontal direction perpendicular to the axial direction, in order to move the twisted pair cable (1) to the position detection station and the subsequent terminal crimping station; and
a position compensation device, which controls the movement distance of the cable moving device (92) based on the difference between the actual position of the pair of core wires (11) detected by the position detection device (93) and the preset position of the pair of core wires (11), to accurately move the pair of core wires (11) of the twisted pair cable (1) to the terminal crimping station.

10. The twisted pair cable processing system according to claim 9,
wherein the position detection device (93) comprises:
a camera (93a) which is used to capture images of the pair of exposed core wires (11) of the twisted pair cable (1); and
a computing device used to calculate the position of the pair of core wires (11) based on the images captured by the camera (93a).

11. The twisted pair cable processing system according to any one of claims 1-10, further comprising:
a core wire untwisting device which is installed on the frame (20) for untwisting the pair of exposed core wires (11) of the twisted pair cable (1),
wherein the core wire untwisting device comprises:
an installation plate (2) fixed to the frame (20);
a rotating wheel (6) which is rotatably mounted on the installation plate (2) and formed with an axial through installation hole (60);
the positioning body (5) which is embedded into the installation hole (60) of the rotating wheel (6) and formed with a pair of core wire insertion holes (5a); and
a driver for driving the rotating wheel (6) and the positioning body (5) embedded in the rotating wheel (6) to rotate together,
wherein when the ends of the pair of exposed core wires (11) of the twisted pair cable (1) are inserted into the pair of core wire insertion holes (5a), the driver drives the rotating wheel (6) and the positioning body (5) to rotate to unwind the pair of exposed core wires (11) of the twisted pair cable (1).

12. The twisted pair cable processing system according to claim 11,
wherein the rotating wheel (6) comprises:
a wheel body (6a) which has axially opposite front and rear sides; and
a pivot shaft part (6b) which is connected to the rear side of the wheel body (6a),
wherein a pivot hole (201) is formed in the installation plate (2), and the pivot shaft part (6b) is rotatably mounted into the pivot hole (201), so that the rotating wheel (6) can be rotated around the axis of the pivot hole (201).

13. The twisted pair cable processing system according to claim 11,
wherein the positioning body (5) comprises:
a main body (50) which is embedded in the installation hole (60); and
a pair of ears (51) connected to the main body (50) and facing each other in the radial direction of the main body (50),
wherein a pair of positioning grooves (61) are formed on the rotating wheel (6), and the pair of ears (51) of the positioning body (5) are embedded in the pair of positioning grooves (61), so that the positioning body (5) cannot be rotated relative to the rotating wheel (6).

14. The twisted pair cable processing system according to claim 11,
wherein the core wire untwisting device further comprises:
a driving wheel (7) which is rotatably mounted on the installation plate (2); and
a transmission belt (8) which is connected between the rotating wheel (6) and the driving wheel (7),
wherein the driver is connected to the driving wheel (7) for driving the driving wheel (7) to rotate, so as to drive the rotating wheel (6) to rotate through the driving wheel (7) and the transmission belt (8).

15. The twisted pair cable processing system according to claim 14,
wherein a receiving recess (202) is formed on the front side of the installation plate (2), and the rotating wheel (6), the driving wheel (7), and the transmission belt (8) are accommodated in the receiving recess (202);
wherein the core wire untwisting device further comprises:
a front cover plate (21) which is installed on an opening of the accommodating recess (202) to cover the opening of the accommodating recess (202).

16. A method for cutting a twisted pair cable, comprising following steps of:
S11: providing the twisted pair cable processing system as claimed in any one of claims 1-15;
S12: using a core wire untwisting device to untwist the pair of exposed core wires (11) of the twisted pair cable (1);
S13: passing the pair of exposed and untwisted core wires (11) of the twisted pair cable (1) through a pair of core wire insertion holes (5a) of the positioning body (5) from front to back;
S14: using a first cable fixture (3) to clamp the twisted pair cable (1) and moving the twisted pair cable (1) axially backwards, so that the cutting end face (10a) of the outer layer (10) of the twisted pair cable (1) is axially pressed against the positioning reference surface (5c) inside the positioning body (5); and
S15: using a cutting tool (4) to cut the pair of exposed core wires (11) of the twisted pair cable (1), so that the length of the pair of exposed core wires (11) of the twisted pair cable (1) is equal to the predetermined length (L).

17. The method for cutting twisted pair cables according to claim 16, wherein the step S15 comprises of:
S151: the upper cutting blade (41) and lower cutting blade (42) of the cutting tool (4) clamp the roots of the pair of core wires (11) and are moved axially backwards to straighten the pair of core wires (11) through the upper cutting blade (41) and lower cutting blade (42);
S152: the upper cutting blade (41) and lower cutting blade (42) of the cutting tool (4) are moved to the predetermined outer insulation layer cutting position and cut the outer insulation layer (11a) of the pair of core wires (11);
S153: the upper cutting blade (41) and lower cutting blade (42) of the cutting tool (4) are moved axially backwards to strip a section of the outer insulation layer (11a) from the pair of core wires (11); and
S154: the upper cutting blade (41) and lower cutting blade (42) of the cutting tool (4) are moved to the predetermined core wire conductor cutting position and cut the exposed core wire conductors (11b) of the pair of core wires (11).
